(19) Europäisches Patentamt
European Patent Office
Office européen des brevets

(11) **EP 2 223 522 B1**

(12) **EUROPEAN PATENT SPECIFICATION**

(45) Date of publication and mention
of the grant of the patent:
**26.07.2017 Bulletin 2017/30**

(51) Int Cl.:
***H04M 9/08*** *(2006.01)*

(21) Application number: **07851945.1**

(22) Date of filing: **21.12.2007**

(86) International application number:
**PCT/NL2007/050685**

(87) International publication number:
**WO 2009/082194 (02.07.2009 Gazette 2009/27)**

(54) **NON LINEAR ACOUSTIC FEEDBACK SUPPRESSION IN A TELEPHONE DEVICE**

NICHTLINEARE AKUSTISCHE RÜCKKOPPLUNGSUNTERDRÜCKUNG IN EINER
TELEFONEINRICHTUNG

SUPPRESSION DE RÉTROACTION ACOUSTIQUE NON LINÉAIRE DANS UN DISPOSITIF
TÉLÉPHONIQUE

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**01.09.2010 Bulletin 2010/35**

(73) Proprietor: **Dialog Semiconductor B.V.
5215 MV 's-Hertogenbosch (NL)**

(72) Inventor: **HELSLOOT, Michiel, André
NL 5231 HD 's-Hertogenbosch (NL)**

(74) Representative: **Nederlandsch Octrooibureau
P.O. Box 29720
2502 LS The Hague (NL)**

(56) References cited:
**WO-A-00/25441      WO-A-03/010950
US-A1- 2004 042 616**

## Description

TECHNICAL FIELD

The invention relates to a telephone device, a method, a computer program and data carrier to suppress acoustic feedback.

STATE OF THE ART

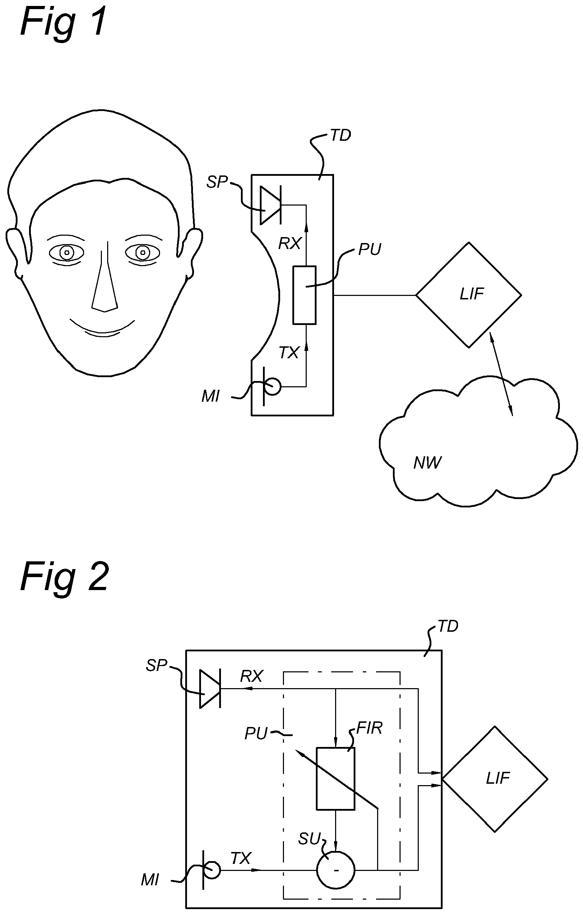

Fig. 1 schematically depicts a telephone device TD according to the prior art, comprising a microphone MI, speaker SP and a processing unit PU.

The microphone MI is arranged to detect sound, for instance speech, and transmit a microphone signal TX representing the detected sound to the processing unit PU. The processing unit PU is arranged to transmit this signal to a receiving party via a line interface LIF.

The processing unit PU may further be arranged to receive a speaker signal RX via the line interface LIF and transmit this speaker signal RX to the speaker SP. The speaker SP is arranged to generate a sound signal based on the received speaker signal RX.

The line interface LIF may for instance interface a network NW, which may be the public switched telephone network (PSTN), Voice over IP (VoIP), (asymmetric) digital subscriber line ((A)DSL), integrated services digital network (ISDN). The line interface to a communication network or terminal may be wireless of wired.

The telephone device TD may also be a cordless telephone that is arranged to communicate with a nearby base station, for instance according to the DECT standard. In that case, the link with the line interface is via the base station. US 2004/042616 A1 discloses An echo cancelling system and an echo cancelling method are provided, which can deal with the case where there are a plurality of echo paths and respond to the variation in echo arrival times. An echo cancelling method to be applied to a full-duplex communication system includes detecting a respective echo arrival time of one or plural echo paths based on a reference signal and an echo signal, calculating as many pseudo-echo signals as the detected arrival times, overlapping the calculated pseudo-echo signals to obtain an overall pseudo-echo signal, and subtracting the overall pseudo-echo signal from the echo signal.

WO 03/010950 A1 discloses a communication system having stations mutually coupled through a communication channel, wherein at least one of the stations is provided with echo cancelling (EC) means. The EC means comprise: adaptive EC means arranged for simulating linear echo effects in said station, a subtracter coupled to the adaptive EC means and having a subtracter output, and non-linear EC means coupled to the subtracter output for simulating additional echo effects in the communication station. The telephone device TD may be formed in many ways. For instance, the telephone device TD may comprise a processing unit PU which has a microphone MI and a speaker SP associated with it. The microphone MI and the speaker SP may be comprised by the telephone device TD, but may also comprise one or two remote components (remote microphone and/or speaker) arranged to communicate with the processing unit PU via a wireless or wired communication link (for instance using Bluetooth).

Telephone devices TD often comprise the option to be used as speaker phones. When used as a speaker phone, the telephone device TD may further comprise an echo canceller to prevent acoustic feedback, as may occur when the microphone MI picks up the sound generated by the speaker SP. Such an echo canceller may comprise an acoustic feedback finite impulse response filter FIR. This will be explained in more detail below with reference to Fig. 2.

It is an object to provide a telephone device and method to suppress acoustic feedback more efficiently.

SHORT DESCRIPTION

According to an aspect there is provided a telephone device arranged to receive a microphone signal from a microphone and a speaker signal from a line interface, the telephone device being arranged to transmit the microphone signal to the line interface and the speaker signal to a speaker, characterized in that the telephone device is arranged to determine a substantial similarity between a first frequency component of the speaker signal and a second frequency component of the microphone signal for at least a predetermined time interval, wherein the substantial similarity is determined if the amplitude of the first frequency component of the speaker signal and the amplitude of the second frequency component of the microphone signal have a substantial similar shape during the at least predetermined time interval, and attenuate the second frequency of the microphone signal for the at least predetermined time interval if a substantial similarity is determined, wherein the first frequency component has a first frequency and the second frequency component has a second frequency, the first and second frequency being in an harmonic relation with respect to each other. This provides an effective way of reducing non linear acoustic feedback.

According to an embodiment the telephone device comprises a processing unit arranged to receive the speaker signal and the microphone signal, determine the substantial similarity and attenuate the second frequency.

According to an embodiment the telephone device is further arranged to transform the speaker signal and the microphone signal to the frequency domain.

According to an embodiment the first frequency component has a first frequency and the second frequency component has a second frequency, the first and second frequency being in a harmonic relation with respect to each other. For instance, the second frequency is n times the first frequency, where n = 1, 2, 3, ....

According to an embodiment the substantial similarity is determined if the derivate of the first frequency component of the speaker signal is at least in a predetermined proportion with respect to the derivative of the second frequency component of the microphone signal during the at least predetermined time interval. The predetermined proportion may be a ratio and may function as a threshold, such that attenuation only takes place when the threshold is met.

According to an embodiment the substantial similarity is determined if the derivate of the first frequency component of the speaker signal has a similar sign as the derivative of the second frequency component of the microphone signal during the at least predetermined time interval.

According to an embodiment the substantial similarity is determined if a second or higher derivate of the first frequency component of the speaker signal has a similar sign as a second or higher derivative of the second frequency component of the microphone signal during the at least predetermined time interval.

According to an embodiment the second frequency of the microphone signal for the predetermined time interval is only attenuated if at least one further criterion is fulfilled.

According to an embodiment the criterion further comprises that the first frequency component of the speaker signal and the second frequency component of the microphone signal are at least in a predetermined proportion with respect to each other.

According to an embodiment both the microphone signal and the speaker signal are available in the frequency domain.

According to an aspect there is provided a method for a telephone device, the method comprising

- receiving a microphone signal from a microphone,
- receiving a speaker signal from a line interface,
- transmitting the microphone signal to the line interface and
- transmitting the speaker signal to a speaker, characterized in that method further comprises:

  - detecting a substantial similarity between a first frequency component of the speaker signal and a second frequency component of the microphone signal for at least a predetermined time interval,
    wherein the substantial similarity is determined if the amplitude of the first frequency component of the speaker signal and the amplitude of the second frequency component of the microphone signal have a substantial similar shape during the at least predetermined time interval, and if the substantial similarity is detected
  - suppressing the second frequency of the microphone signal for the at least predetermined time interval, wherein the first frequency component has a first frequency and the second frequency component has a second frequency, the first and second frequency being in an harmonic relation with respect to each other.

According to an aspect there is provided a computer program, when loaded on a computer arrangement, is arranged to perform the method described above.

According to an aspect there is provided a data carrier, comprising a computer program according to the above.

SHORT DESCRIPTION OF THE DRAWINGS

Embodiments of the invention will now be described, by way of example only, with reference to the accompanying schematic drawings in which corresponding reference symbols indicate corresponding parts, and in which:

- Figure 1 schematically depicts a telephone device according to the prior art,
- Fig. 2 schematically depicts a telephone device according to the prior art in more detail,
- Fig. 3, 4 and 5 schematically depict echo suppression according to the prior art,
- Fig. 6a and 6b schematically depicts frequency components as a function of time respectively,
- Fig. 7 schematically depicts a processing unit according to an embodiment,
- Fig. 8 schematically depicts a flow diagram according to an embodiment.

Same reference numbers used in different figures refer to similar components.

DETAILED DESCRIPTION

As mentioned above, telephone devices TD often comprise the option to be used as a speaker phone. When used as a speaker phone, the speaker SP volume is adjusted to a relatively high level. When used as a speaker phone, the telephone device TD may further comprise an echo canceller to prevent acoustic feedback, as may occur when the microphone MI picks up the sound generated by the speaker SP. Such an echo canceller may comprise an acoustic feedback finite impulse response filter FIR. Of course, such an echo canceller may also be used to prevent acoustic feedback when the telephone device TD is not used as a speaker phone.

Finite impulse response filters are a type of digital filter, known to a skilled person and are defined by a number of acoustic feedback parameters. The output signal y(n) of such an acoustic feedback finite impulse response filter FIR at a time n, is the weighted sum of the input signal x(n) at time n and a predetermined number of 'older' input signals at times n-1 to n-R, where the acoustic feedback parameters of the acoustic feedback finite impulse response filter FIR are defined by acoustic feedback weighing factors $a_i$ of the acoustic feedback finite impulse response filter FIR of the weighted sum and where R determines the order of the filter:

$$y(n) = \sum_{i=0}^{i=R} a_i x(n-i).$$

A more detailed view of such an echo canceller is schematically depicted in Fig. 2. Fig. 2 shows the telephone device TD according to Fig. 1, in which the processing unit PU is shown in more detail. It will however be understood that the processing unit PU is not shown in full detail and may comprise further functionality, such as a CODEC for performing analogue-to-digital conversion and vice versa.

The processor unit PU comprises an acoustic feedback finite impulse response filter FIR and an acoustic feedback subtractor SU.

The processor unit PU receives speaker signal RX via line interface LIF. The speaker signal RX is to be transmitted to speaker SP. The speaker SP generates a sound based on the speaker signal RX.

The sound generated by the speaker SP may be registered by the microphone MI. The microphone signal TX coming from the microphone MI entering the processing unit PU may now comprise two components:

**TX$_{speech}$**) sound that is to be transmitted via the line interface LIF (for instance speech from the user), and
**TX$_{speaker}$**) sound that is picked up from the speaker SP.

In order to prevent acoustic feedback, this second term is to be removed from the microphone signal TX. This removal can not simply be done by subtracting the incoming speaker signal RX from the microphone signal TX, because the second term from the microphone signal TX$_{speaker}$ is not identical to the incoming speaker signal RX as a result of the acoustic path from the speaker SP to the microphone MI, causing deformations, such as delay, distortion, echo.

Suppression is done by splitting the incoming speaker signal RX in two parts, where one part of the speaker signal RX is input to the acoustic feedback finite impulse response filter FIR. The output of the acoustic feedback finite impulse response filter FIR is subtracted from the microphone signal TX using acoustic feedback subtractor SU. By subtracting the output of the acoustic feedback finite impulse response filter FIR from the microphone signal, sound picked up by the microphone MI from the speaker SP is suppressed.

The acoustic feedback parameters $a_i$ of the acoustic feedback finite impulse response filter FIR may be set in such a way that the linear deformation of the sound picked up by the microphone MI from the speaker SP due to the fact that it has travelled from the speaker SP to the microphone MI is accounted for.

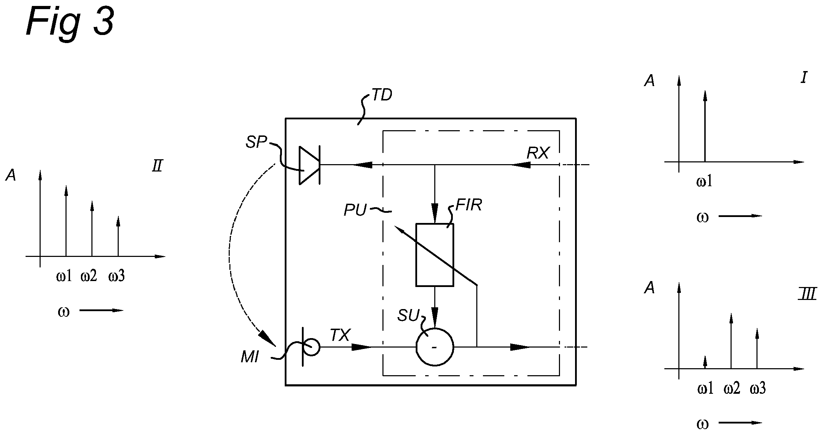

However, it is noted that the echo canceller as described with reference to Fig. 2 does not provide optimal results. The embodiments provided here are based on the insight that the second term from the microphone signal TX$_{speaker}$ (sound that is picked up by the microphone MI from the speaker SP) also comprises harmonics from the speaker signal RX. This is further explained with reference to Fig. 3. These harmonics may be generated by the speaker SP. This is referred to as non linear deformation.

Fig. 3 schematically depicts a telephone device TD as shown in Fig. 2. The speaker signal RX is now also shown in graph I of Fig. 3 in the frequency domain, and comprises a single basic frequency component $\omega 1$ having an amplitude A. The speaker signal RX is fed to the speaker SP and picked up by the microphone MI. However, as shown in graph II in Fig. 3, the echo of the speaker signal RX as picked up by the microphone MI (=TX$_{speaker}$), now also comprises harmonics $\omega 2$, $\omega 3$, etc, where $\omega n = n \cdot \omega 1$, with n = 2, 3, 4, ...

The echo canceller of the telephone device TD, as explained above with reference to Fig. 2, only suppresses the basic frequency component $\omega 1$, but fails to suppress the harmonics $\omega 2$, $\omega 3$, etc. As a result, the second term of the microphone signal TX$_{speaker}$ is not suppressed optimal, disturbing the microphone signal TX. This is shown in graph III of Fig. 3 where the microphone signal still comprises the harmonics $\omega 2$, $\omega 3$, ...., while the $\omega 1$ component is substantially suppressed.

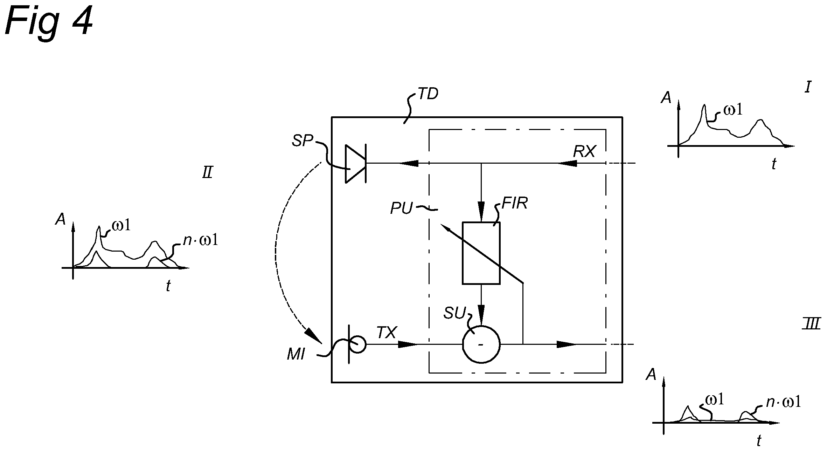

This is further explained with reference to Fig. 4, in which the same situation is depicted, with the accompanying graphs now showing signals in the time domain. Graph I of Fig. 4 shows the amplitude as function of time of the speaker signal RX, representing sound having frequency $\omega 1$. Of course, real sound normally comprises more frequencies for which separate graphs could be depicted. However, for reasons of clarity, the example is provided for one frequency only. The speaker signal RX is fed to the speaker SP and picked up by the microphone MI. However, as shown in graph II in Fig. 4, the echo of the speaker signal RX as picked up by the microphone MI (=TX$_{speaker}$), now also comprises harmonic $\omega 2$, $\omega 3$, etc, where $\omega n = n \cdot \omega 1$. Usually, the shape of $n \cdot \omega 1$ is similar to the shape of $\omega 1$, but with a lower amplitude.

The echo canceller of the telephone device TD, as explained above with reference to Fig. 2, only suppresses the basic frequency component $\omega 1$, but fails to suppress the harmonics $\omega 2$, $\omega 3$, etc. As a result, the second term of the microphone signal TX$_{speaker}$ is not suppressed optimal, disturbing the microphone signal TX. This is shown in graph III of Fig. 4 where the microphone signal still comprises the harmonics $\omega 2$, $\omega 3$, ...., while the basic frequency component $\omega 1$ is substantially suppress.

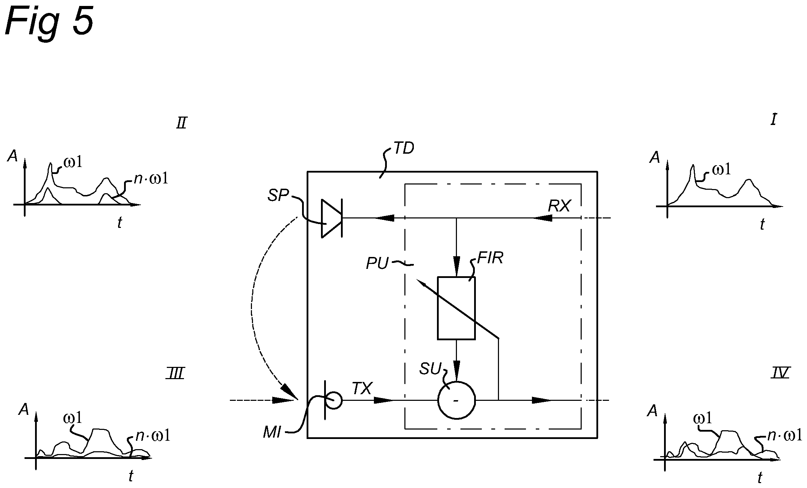

Fig. 5 schematically depicts a similar situation as in Fig. 4. However, according to this example, the microphone signal as picked up by the microphone MI also comprises a component TX$_{speech}$, i.e. sound that is to be transmitted via the line interface LIF (for instance speech from the user) as shown in graph III of Fig. 5. The speech signal comprises the basic frequency ω1 and also sound with a frequency of n·ω1. Graph IV of Fig. 5 shows ω1, which is the sum of suppressed ω1 of graph II and ω1 of graph III (not suppressed). Graph IV of Fig. 5 further shows n·ω1 (n= 2, 3, ...), which is the sum of n·ω1 of graph II and n·ω1 of graph III, both not being suppressed.

As can be seen in graph IV of Fig. 5, the echo is substantially suppressed for the basic frequency ω1, but suppression has substantially failed for the harmonic frequencies n·ω1.

Summarizing the above:

- the speaker SP plays RX speaker + RX deformation;
- the microphone MI registers TX speech + echo (RX speaker + RX deformation); now assume that TX speech = 0:
- echo (RX speaker + RX deformation) is fed to the subtractor SU,
- using the output of the finite impulse response filter FIR, the subtractor SU subtracts an approximation of echo (RX speaker): approx (echo (RX speaker));
- resulting in echo (RX speaker + RX deformation) - approx (echo (RX speaker)); now assume that the finite impulse response filter FIR is accurate,
- the subtraction results in echo (RX speaker + RX deformation) - echo (RX speaker) = echo (RX deformation).

The deformation of the speaker signal RX, i.e. the higher harmonics can not modelled by the finite impulse response filter FIR and will be forwarded without being suppressed.

EMBODIMENTS

The non linear deformation of the speaker signal RX as outputted by the subtractor SU is detected by watching the frequency components of the speaker signal RX and the output of the subtractor SU in time. Since the deformation components will be harmonics of the original speaker signal RX, the non linear deformation of the speaker signal RX of frequency ω1 will be at n·ω1, where n = 2, 3, 4, ...

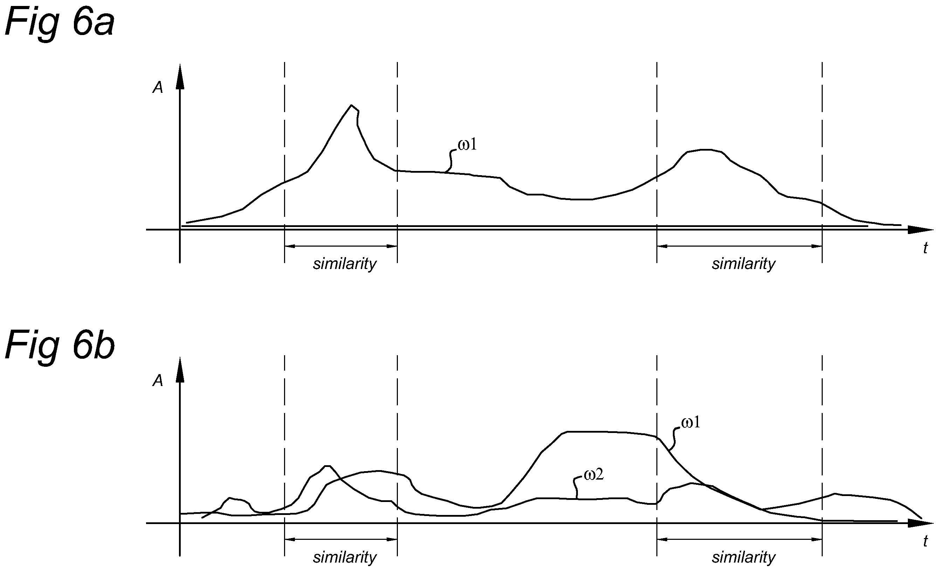

According to an embodiment, the shape of the speaker signal RX for the basic frequency ω1 and the shape of the output of the subtractor SU of the adaptive finite impulse response filter FIR for harmonic frequencies n·ω1 are compared. This is done by digitizing and transformation of the signals into the Fourier domain. The Fourier transformation may be applied to frames of for instance 16 ms comprising 128 samples. Fig. 6a schematically depicts the amplitude of a specific frequency as a function of time (in the time domain, Fig. 6a is similar to graph I of Fig. 5).

At the same time, the received microphone signal TX is Fourier transformed in a similar way. Fig. 6b schematically shows the amplitude of the basic frequency component ω1 and harmonic ω2 as a function of time (in the time domain). Fig. 6b is similar to graph IV of Fig. 5, so ω1 component comprises relatively little feedback of the RX signal as this is substantially suppressed by the finite impulse response filter FIR. The ω1 component does for instance comprise speech of the user of this particular telephone device TD. The ω2 component in Fig. 6b comprises acoustic feedback caused by the speaker signal RX and for instance comprises speech of the user of this particular telephone device TD.

Both Fig. 6a and 6b represent a time interval comprising a plurality of time frames that are used for the Fourier transformation, so for instance Is.

For intervals for which the graph of Fig. 6a has a similar shape as the ω2 component of the graph of Fig. 6b, the ω2 component is suppressed or attenuated. It is assumed that for these intervals of similarity, the ω2 component mainly comprises a deformed echo of the ω1 component of the RX signal and may therefore be suppressed, for instance by attenuation. Two areas of similarity are indicated in Fig. 6b.

Although only shown for a single value of n (n = 2), the same computation may be performed simultaneously for a predetermined number of harmonics (ω2, ω3, ω4, etc).

According to an embodiment, suppression may also be performed for n = 1. According to such an embodiment, linear distortions are also suppressed.

So, coefficients n·ω1 which are substantially similar to the coefficient ω1 of the speaker signal RX may be attenuated, such that the harmonic deformation is suppressed. The suppression factor could be determined based on the ratio between the coefficient ω1 of the speaker signal RX and the coefficient n·ω1. However, it is also possible to use a fixed value for this.

Suppression may be performed by multiplying the signal with a predetermined suppression spectrum, i.e. using a frequency dependent suppression factor. According to an embodiment, smoothening may be applied to avoid steep transitions (resulting in tonal artefacts) further increase the quality of the system.

As described above, both the speaker signal RX and the signal outputted by the subtractor SU are considered for a certain time interval of e.g. 16 ms for which the similarity between these two signals is determined. If the two signals are considered substantially similar, suppression can be applied. It will be understood that the similarity can of course be computed in many different ways. Also, further criteria may be imposed for deciding to suppress or not. In general, the two signals will be considered substantially similar if both the signals have a similar shape.

According to an example, the similarity can be determined by computing the derivative of both signals and see if there are intervals in which the sign of both derivatives have the same sign (positive or negative).

Also the absolute value of the derivates may be compared, possibly in combination with the sign.

So, first the Fourier transforms of the complete RX and TX are computed for a first frame. This results in a set of frequencies and amplitudes ($\omega i,; A_{i,1, RX}$ where i = 1, 2, 3, 4, ...) for the RX signal, and a set of frequencies and amplitudes ($\omega i; A_{i,1, TX}$ where i = 1, 2, 3, 4, ...) for the TX signal. The indices provided respectively indicate the frequency component, the time frame and the signal for which the value is computed.

Next, the Fourier transforms of the complete RX and TX are computed for a second frame. This results in a set of frequencies and amplitudes ($\omega i; A_{i,2,RX}$ where i = 1, 2, 3, 4, ...) for the RX signal, and a set of frequencies and amplitudes ($\omega i; A_{i,2, TX}$ where i = 1, 2, 3, 4, ...) for the TX signal.

Then, the sign of the derivative of the RX signal for $\omega 1$ is computed by comparing $A_{1,1,RX}$ with $A_{1,2,RX}$. If $A_{1,1 RX}$ is greater than $A_{1,2,RX}$ the sign of the derivate is negative, and if $A_{1,1 RX}$ is smaller than $A_{1,2, RX}$ the sign of the derivate is positive.

Next, the same is done for the corresponding $\omega 2$ component of the TX signal by comparing $A_{2,1,TX}$ with $A_{2,2,TX}$. If $A_{2,1,TX}$ is greater than $A_{2,2,TX}$ the sign of the derivate is negative, and if $A_{2,1,TX}$ is smaller than $A_{2,2,TX}$ the sign of the derivate is positive.

So, if the signs of the derivatives are identical, the two signals can be considered similar, i.e. the $\omega 1$ component of the RX signal and the $\omega 2$ component of the TX signal. The computation may also be performed for $\omega 3$, $\omega 4$ etc.

The computation may be repeated for other values of $\omega 1$', for instance predetermined values of $\omega 1$' may be taken from the interval of the original $\omega 1$ to $2 \cdot \omega 1$.

The value of the original or basic frequency $\omega 1$ may be chosen based on the outcome of an analysis of the speaker signal RX. The value of $\omega 1$ may be chosen lower if the speaker signal RX is relatively low (male voice) and the value of $\omega 1$ may be chosen higher if the speaker signal RX is relatively high (female voice).

For instance, it may be required that the signs of the derivatives are identical for a predetermined number of consecutive frames. The number of consecutive frames may be programmable and may typically be 2 - 4 frames, also depending on the frame length. Using relatively many frames increases the quality of the system. Using relatively few frames reduces the delay of the system.

Of course, additional ways may be employed to decide if two signals are similar, as will be understood by the skilled person.

So, according to an embodiment the substantial similarity is determined if the amplitude of the first frequency component of the speaker signal and the amplitude of the second frequency component of the microphone signal have a substantial similar shape during the at least predetermined time interval. There are different approaches conceivable for determining the substantial similarity, of which a few are mentioned here.

According to an embodiment, the substantial similarity is determined if the derivate of the amplitude of the first frequency component of the speaker signal is in a predetermined proportion with respect to the derivative of the second frequency component of the microphone signal during at least a predetermined time interval.

Also, according to an embodiment the substantial similarity is determined if the derivative of the first frequency component of the speaker signal has a similar sign as the derivative of the second frequency component of the microphone signal during the at least predetermined time interval.

Or, according to a further embodiment the substantial similarity is determined if a second or higher derivate of the first frequency component of the speaker signal has a similar sign as a second or higher derivative of the second frequency component of the microphone signal during the at least predetermined time interval.

Further criteria

According to an alternative it may be required that the absolute values of for instance $A_{1,1,RX}$ and $A_{2,1,TX}$ are in at least in a predetermined proportion with respect to each other. For instance, it may be required that $A_{1,1,RX}$ is at greater than $A_{2,1,TX}$. If this is not the case, TX can be supposed to comprise more than just an echo of RX and suppression is not desired. It may also be required that $A_{1,1,RX} > C \cdot A_{2,1,TX}$ where C is a predetermined constant. If this requirement is not fulfilled and thus $A_{1,1,RX} \leq C \cdot A_{2,1,TX}$, TX can be supposed to comprise mare than just an echo of RX and suppression is not desired. The value of C may be predetermined and may be a function of the considered frequency for RX and the considered frequency of TX.

So, according to an embodiment the second frequency of the microphone signal TX for the predetermined time interval is only attenuated if at least one further criterion is fulfilled. The further criterion comprises that the first frequency component of the speaker signal RX and the second frequency component of the microphone signal TX are at least in a predetermined proportion with respect to each other.

For intervals for which the graph of Fig. 6a has a similar shape as the $\omega 2$ component of the graph of Fig. 6b, and possibly further criteria are fulfilled, the $\omega 2$ component is assumed to mainly comprise a deformation or harmonic of the speaker signal RX as shown in Fig. 6a. For these intervals, the $\omega 2$ component is suppressed.

The above described embodiment may be referred to as a spectral subtractor.

It is to be noted that the embodiments as described here relate to the use of a spectral subtractor in combination with a finite impulse response filter FIR. However, it will be understood by a skilled person that the spectral subtractor may also be used without combining it with a finite impulse response filter FIR.

In case the spectral subtractor is used in combination with a finite impulse response filter FIR, the spectral subtractor is used to suppress harmonics of the basic frequency component $\omega 1$, so harmonics $\omega n$, where $\omega n = n \cdot \omega 1$, where n = 2, 3, 4, ...

In case the spectral subtractor is used without combination with a finite impulse response filter FIR, the spectral subtractor is used to suppress harmonics of the basic frequency component $\omega 1$ as well as the echo of the basic frequency component itself, so frequencies $\omega n$, where $\omega n = n \cdot \omega 1$, where n = 1, 2, 3, 4, ...

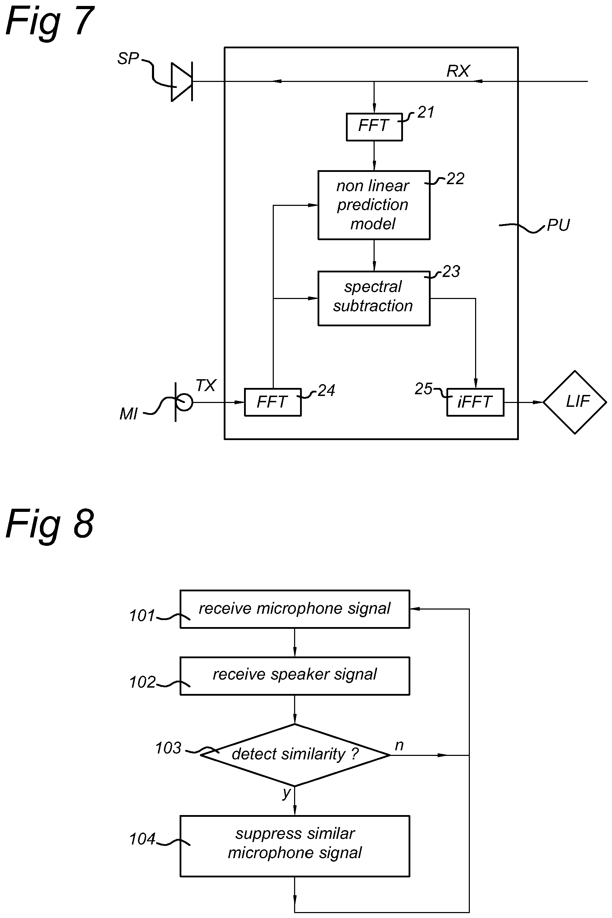

Fig. 7 shows the processing unit PU that is arranged for performing the above described embodiments in a schematic and functional way. As input, the processing unit PU receives the speaker signal RX and the microphone signal TX as received by the microphone MI. From both the speaker signal RX and the microphone signal TX are transformed to the frequency domain, for instance by applying a Fourier transformation techniques, for instance fast Fourier transformation, as indicated by blocks 21, 24. Of course, other suitable techniques, such as DCT (discrete cosines transformation) may be used.

It will be understood that the embodiments may also be performed in an other domain, such as the time domain.

Both the Fourier transforms of the speaker signal RX and the microphone signal RX are fed to the non-linear prediction model (see reference number 22 in Fig. 7). As explained above, this model compares the behaviour in time of at least one basic frequency $\omega 1$ of the speaker signal RX with the behaviour of predetermined frequencies $\omega n$ ($\omega n = n \cdot \omega 1$) in the microphone signal TX. If similarity is detected for instance by using, a spectral subtraction is carried out, indicated in Fig, 7 with a separate block 23.

The signal that results after this spectral subtraction is fed to an inverse fast Fourier transformation (block 25) before it is outputted to the line interface LIF. Possibly further processing is applied before the signal is outputted to the line interface LIF, as will be understood by a skilled person.

Fig. 7 does not show a finite impulse response filter FIR. However, it will be understood that Fig. 7 may also be provided in combination with a finite impulse response filter FIR.

Fig, 8 schematically depicts a flow diagram of a method as may be performed by the telephone device according to an embodiment.

In a first action 101, the telephone device TD may be arranged to receive a microphone signal TX. The microphone signal TX may be received by means of the microphone. It will be understood that this action may further comprise some processing actions, such as digitalization and transformation into the frequency domain to prepare the microphone signal TX for further processing.

In a second action 102, the telephone device TD may be arranged to receive a speaker signal RX. The microphone signal TX may be received via the line interface LIF. It will be understood that this action may further comprise some processing actions, such as digitalization and transformation into the frequency domain to prepare the speaker signal RX for further processing.

In a next action 103, the telephone device TD may be arranged to detect a substantial similarity between a first frequency component of the speaker signal RX and a second frequency component of the microphone signal TX for at least a predetermined time interval. This action may be done for a predetermined number of first frequency components, which may be compared with a predetermined number of second frequencies.

If no substantial similarity is detected the telephone device TD may return to action 101. If a similarity is detected, the telephone device TD is arranged to proceed with action 104, in which the second frequency of the microphone signal TX for the at least predetermined time interval is suppressed.

It will be understood that many variations to this method are conceivable. For instance, actions 101 and 102 may be performed in a different order, or may be performed simultaneously.

According to an embodiment, the flow diagram described with respect to Fig. 8 also comprises using a linear suppression technique, such as a finite impulse response filter as described with reference to Fig. 2. This may for instance be added in between actions 102 - 103, after action 103 (yes and no variant) or after action 104.

For reasons of clarity, the frequency transformations are not shown in Fig. 8. However, it will be understood that frequency transformation can be applied, for instance in between action 102 and 103. Also, inverse frequency transformation can be applied, for instance after action 103 or action 104.

Also, in additions to decision action 103, a further decision action may be added in which the above described further criteria are tested for deciding to execute action 104 or not.

It will be understood that the above method may be performed by the telephone device TD. The method may be performed by the processing unit PU comprised by the telephone device TD. The processing unit PU may be a computer device comprising a processor that has access to a memory unit. The memory unit may comprise a computer program comprising programming lines or instructions that are readable and executable by the processor to enable the processing unit PU to perform any one of the embodiments described here.

Therefore, according to an embodiment there is provided a computer program that, when loaded on a computer arrangement, is arranged to perform any one of the methods described above. Also, according to an embodiment, there is provided a data carrier, comprising such a computer program.

For reasons of clarity, the above examples were only described with respect to discrete tones (having only a single frequency component). However, it will be understood that real-life signals usually comprise more than one frequency, i.e. comprise a band of frequencies. For this situation, more than one first frequency ω1 may be used.

For situations in which the speaker signal RX and the microphone signal $TX_{speech}$ (without the echo) are different tones and do not have a n·ω relation, the harmonics of the speaker signal RX will be suppressed without affecting the microphone signal $TX_{speech}$. This may be regarded as a full-duplex situation, i.e. a situation in which when both parties (caller and receiving party) speak at the same time, both signals are transmitted in good order.

Of course, in case the speaker signal RX and the microphone signal $TX_{speech}$ (without the echo) are broadband signals (i.e. comprising a plurality of frequencies/frequency band), there may be n·ω relationships between these two signals. For instance, the second harmonic 2·ω2 of the speaker signal RX may coincide with a frequency present in the microphone signal $TX_{speech}$ that is to be transmitted via the line interface LIF. As a result of the above described embodiment, the microphone signal $TX_{speech}$ will be suppressed or deformed to some extent, resulting in "less full-duplex" situation or semi-full-duplex situation, although the non-linear echo of the speaker signal RX will be substantially suppressed or cancelled.

It will be understood that the further criteria as described above may prevent suppression of (components of) the microphone signal TX, although this may not be prevented completely. However, it is noted that some suppression of the microphone signal TX is less disturbing than (audible) non linear deformation.

Also, in between the frequencies of the harmonics (1·ω1, 2·ω2, 3·ω3, 4·ω4,...) the microphone signal TX will not be suppressed, ensuring that the speaker signal $TX_{speech}$ is not completely suppressed.

In this text the term suppression is used. It will be understood that the term suppression is used to indicate that the amplitude or the energy of a certain signal is decreased. Suppression comprises completely blocking the signal as well as attenuating the signal, for instance by decreasing the amplitude or energy with for instance 50%.

The descriptions above are intended to be illustrative, not limiting. Thus, it will be apparent to one skilled in the art that modifications may be made to the invention as described without departing from the scope of the claims and their technical equivalents set out below.

**Claims**

1. Telephone device (TD) arranged to receive a microphone signal (TX) from a microphone (MI) and a speaker signal (RX) from a line interface (LIF), the telephone device being arranged to transmit the microphone signal (TX) to the line interface (LIF) and the speaker signal (RX) to a speaker (SP), **characterized in that** the telephone device (TD) is arranged to determine a substantial similarity between a first frequency component of the speaker signal (RX) and a second frequency component of the microphone signal (TX) for at least a predetermined time interval, wherein the substantial similarity is determined if the amplitude of the first frequency component of the speaker signal (RX) and the amplitude of the second frequency component of the microphone signal (TX) have a substantial similar shape during the at least predetermined time interval, and attenuate the second frequency of the microphone signal (TX) for the at least predetermined time interval if the substantial similarity is determined, wherein the first frequency component has a first frequency and the second frequency component has a second frequency, the first and second frequency being in an harmonic relation with respect to each other.

2. Telephone device according to claim 1, wherein the telephone device (TD) comprises a processing unit (PU) arranged to receive the speaker signal (RX) and the microphone signal (TX), determine the substantial similarity and attenuate the second frequency.

3. Telephone device according to any one of the preceding claims, wherein the telephone device (TD) is further arranged to transform the speaker signal (RX) and the microphone signal (TX) to the frequency domain.

4. Telephone device according to any one of the preceding claims, wherein the substantial similarity is determined if the derivate of the first frequency component of the speaker signal (RX) is at least in a predetermined proportion with respect to the derivative of the second frequency component of the microphone signal (TX) during the at least predetermined time interval.

5. Telephone device according to any one of the preceding claims, wherein the substantial similarity is determined if the derivate of the first frequency component of the speaker signal (RX) has a similar sign as the derivative of the second frequency component of the microphone signal (TX) during the at least predetermined time interval.

6. Telephone device according to any one of the preceding claims, wherein the substantial similarity is determined if a second or higher derivate of the first frequency component of the speaker signal (RX) has a similar sign as a second or higher derivative of the second frequency component of the microphone signal (TX) during the at least predetermined time interval.

7. Telephone device according to any one of the preceding claims, wherein the second frequency of the microphone signal (TX) for the predetermined time interval is only attenuated if at least one further criterion is fulfilled.

8. Telephone device according to claim 8, wherein the criterion further comprises that the first frequency component of the speaker signal (RX) and the second frequency component of the microphone signal (TX) are at least in a predetermined proportion with respect to each other.

9. Telephone device according to any one of the preceding claims, wherein both the microphone signal (TX) and the speaker signal (RX) are available in the frequency domain.

10. Method for a telephone device, the method comprising

- receiving a microphone signal (TX) from a microphone (MI),
- receiving a speaker signal (RX) from a line interface (LIF),
- transmitting the microphone signal (TX) to the line interface (LIF) and
- transmitting the speaker signal (RX) to a speaker (SP),

characterized in that method further comprises:

- detecting a substantial similarity between a first frequency component of the speaker signal (RX) and a second frequency component of the microphone signal (TX) for at least a predetermined time interval, wherein the substantial similarity is determined if the amplitude of the first frequency component of the speaker signal (RX) and the amplitude of the second frequency component of the microphone signal (TX) have a substantial similar shape during the at least predetermined time interval, and if the substantial similarity is detected
- suppressing the second frequency of the microphone signal (TX) for the at least predetermined time interval, wherein the first frequency component has a first frequency and the second frequency component has a second frequency, the first and second frequency being in an harmonic relation with respect to each other.

11. Computer program, when loaded on a computer arrangement, is arranged to perform the methods according to claim 10.

12. Data carrier, comprising a computer program according to claim 11.

**Patentansprüche**

1. Telefongerät (TD), das eingerichtet ist, um ein Mikrofonsignal (TX) von einem Mikrofon (MI) und ein Lautsprechersignal (RX) von einer Leitungsschnittstelle (LIF) zu empfangen, wobei das Telefongerät eingerichtet ist, um das Mikrofonsignal (TX) an die Leitungsschnittstelle (LIF) und das Lautsprechersignal (RX) an einen Lautsprecher (SP) zu senden, **dadurch gekennzeichnet, dass** das Telefongerät (TD) eingerichtet ist, um eine wesentliche Ähnlichkeit zwischen einer ersten Frequenzkomponente des Lautsprechersignals (RX) und einer zweiten Frequenzkomponente des Mikrofonsignals (TX) für zumindest ein vorgegebenes Zeitintervall zu bestimmen, wobei die wesentliche Ähnlichkeit bestimmt wird, wenn die Amplitude der ersten Frequenzkomponente des Lautsprechersignals (RX) und die Amplitude der zweiten Frequenzkomponente des Mikrofonsignals (TX) zumindest während des vorgegebenen Zeitintervalls eine im Wesentlichen ähnliche Form aufweisen, und die zweite Frequenz des Mikrofonsignals (TX) zumindest für das vorgegebene Zeitintervall abzuschwächen, falls die wesentliche Ähnlichkeit festgestellt wird, wobei die erste Frequenzkomponente eine erste Frequenz aufweist, die zweite Frequenzkomponente eine zweite Frequenz aufweist und die erste und die zweite Frequenz zueinander in einer harmonischen Relation stehen.

2. Telefongerät nach Anspruch 1, wobei das Telefongerät (TD) eine Verarbeitungseinheit (PU) umfasst, die eingerichtet ist, um das Lautsprechersignal (RX) und das Mikrofonsignal (TX) zu empfangen, die wesentliche Ähnlichkeit zu bestimmen und die zweite Frequenz abzuschwächen.

3. Telefongerät nach einem der vorhergehenden Ansprüche, wobei das Telefongerät (TD) ferner eingerichtet ist, um das Lautsprechersignal (RX) und das Mikrofonsignal (TX) in den Frequenzbereich umzuwandeln.

4. Telefongerät nach einem der vorhergehenden Ansprüche, wobei die wesentliche Ähnlichkeit bestimmt wird, wenn die Ableitung der ersten Frequenzkomponente des Lautsprechersignals (RX) zumindest in einem vorgegebenen Verhältnis zur Ableitung der zweiten Frequenzkomponente des Mikrofonsignals (TX) zumindest während des vorgegebenen Zeitintervalls liegt.

5. Telefongerät nach einem der vorhergehenden Ansprüche, wobei die wesentliche Ähnlichkeit bestimmt wird, wenn die Ableitung der ersten Frequenzkomponente des Lautsprechersignals (RX) ein gleiches Vorzeichen wie die Ableitung der zweiten Frequenzkomponente des Mikrofonsignals (TX) zumindest während des vorgegebenen Zeitintervalls aufweist.

6. Telefongerät nach einem der vorhergehenden Ansprüche, wobei die wesentliche Ähnlichkeit bestimmt wird, wenn eine zweite oder höhere Ableitung der ersten Frequenzkomponente des Lautsprechersignals (RX) ein gleiches Vorzeichen wie eine zweite oder höhere Ableitung der zweiten Frequenzkomponente des Mikrofonsignals (TX) zumindest während des vorgegebenen Zeitintervalls aufweist.

7. Telefongerät nach einem der vorhergehenden Ansprüche, wobei die zweite Frequenz des Mikrofonsignals (TX) für das vorgegebene Zeitintervall nur abgeschwächt wird, wenn zumindest ein weiteres Kriterium erfüllt ist.

8. Telefongerät nach Anspruch 7, wobei das Kriterium ferner umfasst, dass die erste Frequenzkomponente des Lautsprechersignals (RX) und die zweite Frequenzkomponente des Mikrofonsignals (TX) zueinander zumindest in einem vorgegebenen Verhältnis stehen.

9. Telefongerät nach einem der vorhergehenden Ansprüche, wobei sowohl das Mikrofonsignal (TX) als auch das Lautsprechersignal (RX) im Frequenzbereich verfügbar sind.

10. Verfahren für ein Telefongerät, wobei das Verfahren umfasst:

   - Empfangen eines Mikrofonsignals (TX) von einem Mikrofon (MI),
   - Empfangen eines Lautsprechersignals (RX) von einer Leitungsschnittstelle (LIF),
   - Senden des Mikrofonsignals (TX) an die Leitungsschnittstelle (LIF) und
   - Senden des Lautsprechersignals (RX) an einen Lautsprecher (SP),

   **dadurch gekennzeichnet, dass** das Verfahren ferner umfasst:

   - Bestimmen einer wesentlichen Ähnlichkeit zwischen einer ersten Frequenzkomponente des Lautsprechersignals (RX) und einer zweiten Frequenzkomponente des Mikrofonsignals (TX) für zumindest ein vorgegebenes Zeitintervall, wobei die wesentliche Ähnlichkeit bestimmt wird, wenn die Amplitude der ersten Frequenzkomponente des Lautsprechersignals (RX) und die Amplitude der zweiten Frequenzkomponente des Mikrofonsignals (TX) zumindest während des vorgegebenen Zeitintervalls eine im Wesentlichen ähnliche Form aufweisen, und, wenn die wesentliche Ähnlichkeit bestimmt wird,
- Unterdrücken der zweiten Frequenz des Mikrofonsignals (TX) zumindest für das vorgegebene Zeitintervall, wobei die erste Frequenzkomponente eine erste Frequenz aufweist, die zweite Frequenzkomponente eine zweite Frequenz aufweist und die erste und die zweite Frequenz zueinander in einer harmonischen Relation stehen.

11. Computerprogramm, das, wenn es auf eine Computeranordnung geladen wird, eingerichtet ist, das Verfahren nach Anspruch 10 durchzuführen.

12. Datenträger, umfassend ein Computerprogramm nach Anspruch 11.

**Revendications**

1. Dispositif téléphonique (TD) agencé de manière à recevoir un signal de microphone (TX) en provenance d'un microphone (MI) et un signal de haut-parleur (RX) en provenance d'une interface de ligne (LIF), le dispositif téléphonique étant agencé de manière à transmettre le signal de microphone (TX) à l'interface de ligne (LIF) et le signal de haut-parleur (RX) à un haut-parleur (SP) ;
   **caractérisé en ce que** le dispositif téléphonique (TD) est agencé de manière à déterminer une similitude sensible entre une première composante de fréquence du signal de haut-parleur (RX) et une seconde composante de fréquence du signal de microphone (TX) pour au moins un intervalle de temps prédéterminé, dans lequel la similitude sensible est déterminée si l'amplitude de la première composante de fréquence du signal de haut-parleur (RX) et l'amplitude de la seconde composante de fréquence du signal de microphone (TX) présentent une forme sensiblement similaire au cours dudit au moins un intervalle de temps prédéterminé, et à atténuer la seconde fréquence du signal de microphone (TX) pour ledit au moins un intervalle de temps prédéterminé si la similitude sensible est déterminée, dans lequel la première composante de fréquence présente une première fréquence et la seconde composante de fréquence présente une seconde fréquence, la première fréquence et la seconde fréquence étant dans une relation harmonique l'une à l'égard de l'autre.

2. Dispositif téléphonique selon la revendication 1, dans lequel le dispositif téléphonique (TD) comporte une unité de traitement (PU) agencée de manière à recevoir le signal de haut-parleur (RX) et le signal de microphone (TX), à déterminer la similitude sensible et à atténuer la seconde fréquence.

**3.** Dispositif téléphonique selon l'une quelconque des revendications précédentes, dans laquelle le dispositif téléphonique (TD) est en outre agencé de manière à transformer le signal de haut-parleur (RX) et le signal de microphone (TX) dans le domaine fréquentiel.

**4.** Dispositif téléphonique selon l'une quelconque des revendications précédentes, dans lequel la similitude sensible est déterminée si la dérivée de la première composante de fréquence du signal de haut-parleur (RX) est au moins dans une proportion prédéterminée relativement à la dérivée de la seconde composante de fréquence du signal de microphone (TX) au cours dudit au moins un intervalle de temps prédéterminé.

**5.** Dispositif téléphonique selon l'une quelconque des revendications précédentes, dans lequel la similitude sensible est déterminée si la dérivée de la première composante de fréquence du signal de haut-parleur (RX) présente un signe similaire à celui de la dérivée de la seconde composante de fréquence du signal de microphone (TX) au cours dudit au moins un intervalle de temps prédéterminé.

**6.** Dispositif téléphonique selon l'une quelconque des revendications précédentes, dans lequel la similitude sensible est déterminée si une seconde dérivée ou une dérivée supérieure de la première composante de fréquence du signal de haut-parleur (RX) présente un signe similaire à celui d'une seconde dérivée ou d'une dérivée supérieure de la seconde composante de fréquence du signal de microphone (TX) au cours dudit au moins un intervalle de temps prédéterminé.

**7.** Dispositif téléphonique selon l'une quelconque des revendications précédentes, dans lequel la seconde fréquence du signal de microphone (TX) pour l'intervalle de temps prédéterminé est uniquement atténuée si au moins un critère supplémentaire est rempli.

**8.** Dispositif téléphonique selon la revendication 8, dans lequel le critère inclut en outre que la première composante de fréquence du signal de haut-parleur (RX) et la seconde composante de fréquence du signal de microphone (TX) sont au moins dans une proportion prédéterminée l'une à l'égard de l'autre.

**9.** Dispositif téléphonique selon l'une quelconque des revendications précédentes, dans lequel, tant le signal de microphone (TX) que le signal de haut-parleur (RX) sont disponibles dans le domaine fréquentiel.

**10.** Procédé pour un dispositif téléphonique, le procédé comprenant les étapes ci-dessous consistant à :

- recevoir un signal de microphone (TX) en provenance d'un microphone (MI) ;
- recevoir un signal de haut-parleur (RX) en provenance d'une interface de ligne (LIF) ;
- transmettre le signal de microphone (TX) à l'interface de ligne (LIF) ; et
- transmettre le signal de haut-parleur (RX) à un haut-parleur (SP) ;

**caractérisé en ce que** le procédé comporte en outre les étapes ci-dessous consistant à :

- détecter une similitude sensible entre une première composante de fréquence du signal de haut-parleur (RX) et une seconde composante de fréquence du signal de microphone (TX) pour au moins un intervalle de temps prédéterminé, dans lequel la similitude sensible est déterminée si l'amplitude de la première composante de fréquence du signal de haut-parleur (RX) et l'amplitude de la seconde composante de fréquence du signal de microphone (TX) présentent une forme sensiblement similaire au cours dudit au moins un intervalle de temps prédéterminé ; et

si la similitude sensible est détectée :

- supprimer la seconde fréquence du signal de microphone (TX) pour ledit au moins un intervalle de temps prédéterminé, dans lequel la première composante de fréquence présente une première fréquence et la seconde composante de fréquence présente une seconde fréquence, la première fréquence et la seconde fréquence étant dans une relation harmonique l'une à l'égard de l'autre.

**11.** Programme informatique qui, lorsqu'il est chargé dans un agencement informatique, est agencé de manière à mettre en oeuvre le procédé selon la revendication 10.

**12.** Support de données, comprenant un programme informatique selon la revendication 11.

# Fig 1

# Fig 2

EP 2 223 522 B1

*Fig 3*

13

Fig 4

EP 2 223 522 B1

Fig 5

EP 2 223 522 B1

*Fig 6a*

*Fig 6b*

## Fig 7

SP

RX

FFT ~21

non linear prediction model ~22

PU

spectral subtraction ~23

TX

MI

FFT ~24

25~ iFFT

LIF

## Fig 8

101— receive microphone signal

102— receive speaker signal

103— detect similarity ?    n

y

104— suppress similar microphone signal

**EP 2 223 522 B1**

## REFERENCES CITED IN THE DESCRIPTION

### Patent documents cited in the description

- US 2004042616 A1
- WO 03010950 A1